# EUROPÄISCHE PATENTSCHRIFT

(11) **EP 0 700 842 B1**
(45) Veröffentlichungstag und Bekanntmachung des Hinweises auf die Patenterteilung: **07.01.1998**
(21) Anmeldenummer: 95890159.7
(22) Anmeldetag: 08.09.1995
(51) Int. Cl.: B65G 1/08, B65G 47/88

(54) **Vorrichtung zum Ausgeben von Stückgütern**
Device for dispensing articles
Dispositif pour distribuer des articles

(30) Priorität: 09.09.1994 AT 1731/94
(43) Veröffentlichungstag der Anmeldung: 13.03.1996
(73) Patentinhaber: KNAPP HOLDING GmbH, 8075 Hart bei Graz (AT)
(72) Erfinder: Freudelsperger, Karl, Dipl.-Ing., A-8071 Hausmannstätten (AT)
(74) Vertreter: Weinzinger, Arnulf, Dipl.-Ing.

(56) Entgegenhaltungen:
- EP-A- 0 165 918
- DE-A- 2 952 764
- DE-A- 3 015 203
- FR-A- 1 326 124
- GB-A- 2 091 674
- US-A- 3 157 292

## Beschreibung

Die Erfindung betrifft eine Vorrichtung zum Ausgeben von Stückgütern aus Magazinen, die gegenüber der Vertikalen geneigt angeordnet sind und an ihrer unteren Stirnseite eine Ausgebeöffnung mit einem Ausgeber aufweisen, welcher durch einen in der Nähe der Ausgebeöffnung angeordneten und gegen Drehung arretierbaren Rotor mit mehreren symmetrisch zueinander versetzten radialen Flügeln gebildet ist, dessen Drehachse unterhalb des Magazinraumes verläuft, und der mit einem Antrieb versehen ist, welche Flügel im Zuge der Drehung des Rotors eine zum Teil durch das Magazin verlaufende Umlaufbahn durchlaufen, wobei sich die Flügel, welche je einen Ausgeber und einen Anschlag für die Stückgüter bilden, bei der Drehung des Rotors in Rutschrichtung der Stückgüter im Magazin bzw. in Ausgeberichtung der Stückgüter aus dem Magazin bewegen, und hierbei jeweils ein Flügel zunächst einen Anschlag bildet, der nach Entriegelung des Rotors von dem der Ausgebeöffnung benachbarten Stückgut gedreht wird, und der nachfolgende Flügel in das Magazin eintritt und einen Anschlag für das nachfolgende Stückgut bildet.

Eine Vorrichtung dieser Art ist durch die DE 29 52 764 A1 bekannt geworden. Diese bekannte Vorrichtung ist für die Ausgabe stabförmiger Gegenstände konzipiert und weist einen Magazinraum auf, der durch einen Durchlaufkanal gebildet ist, welcher durch die Randkanten von mäanderförmig verlaufenden Schlitzen begrenzt ist, welche in mehrere Platten eingearbeitet sind, die im Abstand voneinander parallel zueinander angeordnet sind. Die Anzahl der Platten hängt dabei von der Länge der stabförmigen Gegenstände ab. Am Ausgabeende dieses Durchlaufkanals ist ein Rotor in Form eines Sternrades angeordnet, dessen Drehachse unterhalb des Magazinraumes verläuft und der mit einem Antrieb versehen ist. Die Breite des Durchlaufkanals entspricht mit geringem Spiel dem Durchmesser der im Magazinraum aufzunehmenden und aus diesem Raum auszugebenden Gegenstände, und es sind auch die Größe und der gegenseitige Abstand der Vorsprünge des Sternrades, welche bei dessen Drehung nacheinander in den Magazinraum eintreten und so eine zum Teil durch das Magazin verlaufende Umlaufbahn durchlaufen, genau auf den Durchmesser der auszugebenden stabförmigen Gegenstände abgestimmt, so daß jeweils ein solcher stabförmiger Gegenstand genau in den Raum zwischen zwei aufeinanderfolgenden Vorsprüngen des Sternrades paßt.

Bei einer anderen, aus der EP 165 918 A1 bekannten Vorrichtung ist ein Rotor in Form eines Sternrades zwischen zwei Anschlagleisten für das auszugebende Stückgut frei drehbar gelagert, und dieser Rotor kann mittels eines beidseitig an den Zähnen des Sternrades angreifenden Kulissenschiebers in Drehung versetzt und blockiert werden. Bei der Vorwärtsbewegung des Schiebers wird das auszugebende Stückgut durch eine Drehung des Sternrades zuerst über die Oberkante der Anschlagleisten angehoben; bei der darauffolgenden Rückwärtsbewegung des Schiebers wird das Stückgut dann durch eine weitere Drehung des Sternrades weiter angehoben und ausgegeben.

Aus der DE 29 52 764 A1 ist ebenfalls eine Ausgabevorrichtung mit einem an einer Ausgebeöffnung angeordneten Sternrad bekannt, dessen Welle steuerbar pneumatisch, hydraulisch oder elektrisch antreibbar ist.

Bei der Ausgabevorrichtung gemäß dem DE 91 10 327 U werden gemäß einer ersten Ausführungsform der Ausgeber und der Anschlag von einem mit Hilfe eines Elektromagneten senkrecht durch den Magazinboden in den Innenraum des Magazins hinein und aus diesem heraus bewegbaren Hubstempel gebildet, der in der Ruhestellung in den Innenraum des Magazins hineinragt, während er in der Ausgebestellung mit seiner Oberseite bündig mit dem Magazinboden abschließt. Da die Stückgüter hier über den versenkbaren Anschlag rutschen, kann dessen Höhe in der Ruhestellung beliebig groß gewählt werden. Gemäß einer weiteren Ausführungsform mit versenkbarem Anschlag verläuft eine Anschlagleiste quer zur Stapelachse. Diese Anschlagleiste ist rechtwinkelig am freien Ende einer einseitig eingespannten Federzunge angeordnet und in den Innenraum des Magazins gerichtet. Diese Federzunge liegt unterhalb des unteren Magazinbodens und verläuft in Ruhestellung parallel zu diesem. Ihr freies Ende ist mit dem Anker eines Elektromagneten verbunden. In der Ruhestellung ragt die Anschlagleiste in den Innenraum des Magazins, wogegen sie bei Erregung des Elektromagneten unter elastischer Verformung der Federzunge aus dieser Ruhestellung nach unten in die Ausgebestellung gezogen wird.

Der Erfindung liegt die Aufgabe zugrunde, eine Vorrichtung eingangs erwähnter Art zu schaffen, mit welcher Stückgüter auch unterschiedlicher, in Ausgaberichtung gesehener Länge mit größerer Ausgebegeschwindigkeit aus den Magazinen gefördert werden können.

Hierzu ist die erfindungsgemäße Vorrichtung eingangs erwähnter Art dadurch gekennzeichnet, daß zum Drehen und zum Arretieren des Rotors ein Klinkenmechanismus aus einem mit dem Rotor drehfest verbundenen Klinkenrad und einer Klinke, die auf einem schwenkbaren, mit einem Betätigungsmechanismus verbundenen Klinkenkörper angeordnet und in die Kreisbahn des Klinkenrades hinein- und wieder herausbewegbar ist, vorgesehen ist, und daß die Drehachse des Rotors in oder unterhalb eines Bodens des Magazins verläuft, und daß die Flügel des Rotors durch eine Öffnung des Magazinbodens hindurchbewegbar sind.

Durch diese Ausbildung kann der vorstehenden Zielsetzung in vorteilhafter Weise entsprochen werden. Es ergibt sich hinsichtlich des Arretierens des Rotors gegen Drehen eine baulich einfache und funktionell rasch arbeitende Ausbildung. Das Magazin ist mit einem Boden versehen, auf dem Stückgüter verschiedener Länge gleiten können. Der Klinkenmechanismus erfordert nur geringe Betätigungswege und solcherart können die Arretierung und die Einleitung des Drehens des Rotors mit verhältnismäßig großer Geschwindigkeit erfolgen. Da die Tangentenrichtung der Rotordrehung näherungsweise mit der Rutschrichtung der Stückgüter in der Ausgebephase zusammenfällt, ergibt sich schon am Beginn der Rotordrehung eine Bewegung der Stückgüter, wobei auch für Stückgüter unterschiedlicher Länge oder Höhe eine größere Ausgebegeschwindigkeit erzielt werden kann als bei bekannten Vorrichtungen.

Eine weitere deutliche Erhöhung der Ausgebegeschwindigkeit kann erzielt werden, wenn man vorsieht, daß der Klinkenmechanismus außer der Klinke auch eine Klinkennase aufweist und die Klinke und die Klinkennase wechselweise in die Kreisbahn des Klinkenrades hinein- und wieder herausbewegbar sind und abwechselnd das Klinkenrad arretieren, und die Klinkennase beim Hineinbewegen in die Kreisbahn des Klinkenrades jeweils an einem Zahnrücken des Klinkenrades im Sinne eines Weiterdrehens des Klinkenrades angreift. Es kann so zwangsweise eine Drehbewegung des Rotors in Ausgeberichtung eingeleitet werden, wodurch generell der Ausgebeablauf beschleunigt wird, da hier die Stückgutsäule selbst nur einen kleinen Beitrag zur Drehung des Rotors leisten muß. Dadurch kann die Ausgebegeschwindigkeit um mindestens 25 % erhöht werden. Beim Arretieren des Rotors mittels der Klinke bleibt ein Flügel des Rotors mit seinem freien Ende im Innenraum des Magazins oberhalb des Magazinbodens stehen und hindert die nachfolgenden Stückgüter an einem Weitergleiten. Nach der Entsperrung des Rotors übt dieser Flügel im Bezug auf das betreffende Stückgut eine Anhebe- und Weiterschubfunktion aus, da die Tangentenrichtung der Rotordrehung in Rutsch- bzw. Ausgeberichtung der Stückgüter verläuft.

Für den Betrieb ist es günstig, wenn die Klinke und die Klinkennase untereinander durch einen Mechanismus verbunden sind, der feste Positionen dieser beiden Elemente zueinander festlegt. Es ist - auch hinsichtlich einer baulichen Vereinfachung - andererseits von Vorteil, wenn die Klinke und die Klinkennase am Klinkenkörper angeordnet sind. Hiebei ist es weiter vorteilhaft, wenn die Klinke und die Klinkennase bei Betätigung des Klinkenkörpers in abwechselnder Weise auf das Klinkenrad und damit auf den Rotor einwirken, und so eine Zwangssteuerung der Rotordrehbewegung um einen, dem Flügelwinkelversatz entsprechenden Winkelbetrag erreicht wird.

Vorzugsweise ist der Klinkenkörper mit einem mechanisch, elektromotorisch, elektromagnetisch oder durch einen pneumatischen Druckmittelzylinder angetriebener Betätigungsmechanismus verbunden. Hierbei ist es weiter günstig, wenn der Betätigungsmechanismus mit einer die Klinke in Sperrstellung führenden Rückstellfeder versehen ist. Hierdurch wird die Klinke selbständig in das Klinkenrad gedrückt, wodurch auch bei Ausfall der Energieversorgung mechanisch die Sperrstellung fixiert bleibt. Bei Auslösung einer Ausgabe erfolgt nun gegen die Federkraft die Entriegelung und die Einleitung der Drehung des Rotors in Ausgeberichtung durch die Krafteinwirkung der Klinkennase auf das Klinkenrad. Ein Wegfall der Betätigungskraft bewirkt ein neuerliches Anliegen der Klinkenkontur am Klinkenrad, wodurch ebenfalls eine Unterstützung der Drehbewegung des Rotors in Ausgebedrehrichtung erzielt wird. Bei dieser Ausbildung ist es auch günstig, wenn der Klinkenkörper mit einem als Antrieb dienenden Elektromagneten verbunden ist und ein Sensor oder Schalter vorgesehen ist, der das Abheben des der Ausgebeöffnung nächstliegenden Stückgutes vom Magazinboden erfaßt und den Elektromagneten steuert, wobei beim Abheben des Stückgutes, welches beim In-Bewegung-kommen desselben auftritt, der Elektromagnet, der beim Einschalten im Sinne eines Drehens des Rotors wirkt, abgeschaltet wird.

Da der Klinkenmechanismus nur geringe Betätigungswege erfordert, können auch die Sperrung und die Entriegelung mit entsprechend größerer Geschwindigkeit, verglichen mit den herkömmlichen Vorrichtungen, erfolgen. Da unabhängig von diesem Klinkenmechanismus der Rotor mit seinen Flügeln in wählbarer Höhe in den Innenraum des Magazins hineinragen kann, können auch unterschiedlich hohe Stückgüter mit größerer Geschwindigkeit durch die erfindungsgemäße Vorrichtung ausgegeben werden. Es ist hier erfindungsgemäß von besonderem Vorteil, wenn der Klinkenkörper Antriebsmittel aufweist, die sowohl hinsichtlich ihrer Geschwindigkeit als auch bezüglich ihrer Anpaßbarkeit an unterschiedlich lange Stückgüter über einen elektronischen Rechner regelbar sind.

Nach einer vorteilhaften Weiterbildung der Erfindung wird der jeweils im Magazin vor dem der Ausgebeöffnung benachbarten Stückgut befindliche Flügel des Rotors, wenn er in Ausgeberichtung gedreht wird, soweit geneigt, daß er gemeinsam mit dem nachfolgenden Flügel, der dabei auf seiner Kreisbahn durch eine entsprechende Öffnung im Magazinboden das dort befindliche Stückgut vom Magazinboden her berührt oder ein wenig anhebt, eine Rutschfläche für dieses Stückgut bildet. Dabei weist der Rotor vorteilhaft drei um jeweils 120 % zueinander versetzte Flügel auf, er kann aber mit Vorteil auch zwei oder vier in gleichen Winkelabständen angeordnete Fügel haben. Nach Entsperrung des Rotors durch ein Freigeben der Klinke wird der den Anschlag bildende Flügel einerseits von den Stückgütern und andererseits durch den Druck der Klinkennase auf das Klinkenrad in Rutschrichtung der Stückgüter gedreht und soweit geneigt, daß er gemeinsam mit dem jeweils nachfolgenden Flügel das Stückgut untergreift und nunmehr beide Flügel Teil einer Rutsche bilden, die sich ein wenig oberhalb des Magazinbodens befindet. Infolge der Drehung der Flügel durch den Rotor führt dabei das Stückgut in der Seitenansicht eine Wellenbewegung in Rutschrichtung aus. Sobald das Stückgut die beiden eine Teil-Rutschfläche bildenden Flügel verlassen hat, greift der nachfolgende Flügel weiter in den Innenraum des Magazins ein und sperrt das nachfolgende Stückgut gegen eine Weiterbewegung, sobald die Klinke den Rotor stoppt.

Vorteilhaft weisen die Flügel des Rotors in tangentialer Ansicht eine Rechteck-, Trapez- oder Dreieckform auf, und sie sind durch eine dazu korrespondierende Ausnehmung am Ende des Magazinbodens hindurchbewegbar. Dadurch können die Flügel mit einer relativ großen Breite auf die Unterseite des Stückgutes einwirken und es kann die Flächenpressung zwischen Flügel und Stückgut gering gehalten werden. Die Flügelenden können auch mit kleinen Rollen versehen sein, damit das Stückgut sich leichter über sie hinwegbewegt.

Vorzugsweise haben die Magazine in an sich bekannter Weise einen U-förmigen Querschnitt, wobei der Steg dieses Querschnittes den Magazinboden und die Schenkel die seitlichen Magazinwände bilden. Es ist ferner baulich günstig, wenn mehrere Magazine parallel nebeneinander in einer vertikal geneigten Ebene angeordnet sind.

Vorteilhaft weist die erfindungsgemäße Vorrichtung mehrere Sensoren bzw. Schalter auf, die als Lichtabtaster, als mechanische Schalter oder dergleichen ausgeführt sein können, die an der Ausgebeöffnung, um das Gleiten eines Stückgutes zur Ausgebeöffnung hin zu erfassen, weiter im Bereich des vordersten festgehaltenen Stückgutes im Magazin, um das Nichtvorhandensein eines Stückgutes für einen Ausgebevorgang zu erfassen, und an einer im Drehbereich der Flügel liegenden Stelle, um die Drehbewegung des Rotors, und damit der Flügel, um den gewünschten Winkelbetrag zu erfassen, angeordnet sind, und diese Sensoren bzw. Schalter stehen mit einem elektronischen Rechner in Verbindung. Es kann so die Funktion des Ausgebers unter Verwendung eines elektronischen Rechners auf einfache Weise überprüft werden. Außerdem kann die optimale Steuerung des Klinkenmechanismus bezüglich unterschiedlicher Stückgüter bzw. Stückgutabmessungen erfolgen. Ein leeres Magazin, und damit die Notwendigkeit, dieses wieder aufzufüllen, kann ebenfalls mit diesen Sensoren festgestellt werden.

Vorteilhaft weist die erfindungsgemäße Vorrichtung auch eine Lichtschranke auf, deren Lichtstrahl in der Nähe der Ausgebeöffnung quer über sämtliche Magazinenden verläuft und von einem mehr als ein vorgewähltes Maß über die seitlichen Magazinwände hinausragenden Stückgut unterbrechbar ist. Wird ein Stückgut um mehr als ein vorgewähltes Maß über die seitlichen Magazinwände hinaus angehoben, erfolgt kurzzeitig die Unterbrechung des Lichtstrahl der Lichtschranke, die ein entsprechendes Signal an einen Rechner abgibt. Über diesen elektronischen Rechner sind die Antriebsmittel zum Antrieb des Klinkenmechanismus bzw. des Rotors sowohl hinsichtlich ihrer Geschwindigkeit als auch hinsichtlich des Einschaltzeitpunktes einstellbar bzw. regelbar, und zwar zwecks Anpassung an unterschiedlich lange Stückgüter. Anstelle einer Lichtschranke kann auch ein anderer Schalter, z.B. ein elektromechanischer Schalter vorgesehen werden.

Die Erfindung wird nun unter Bezugnahme auf eine in der Zeichnung schematisch dargestellte bevorzugte Ausführungsform, auf die sie jedoch nicht beschränkt sein soll, noch weiter erläutert.

In der Zeichnung zeigen:
Fig.1 eine teilweise aufgeschnittene, schematische Seitenansicht eines Teiles einer erfindungsgemäßen Vorrichtung mit zwei in einem Teil eines Magazins hintereinandergestapelten Stückgütern sowie einem unterhalb des Magazinbodens gelagerten Rotor und einem Klinkenmechanismus, der sich in Sperrstellung befindet;
Fig.2 die Vorrichtung nach Fig.1 in vergleichbarer Seitenansicht, jedoch bei Freigabe der Klinke und Berührung der Klinkennase mit dem Klinkenrad;
Fig.3 die Vorrichtung nach Fig.1 und 2 in entsprechender Ansicht, nun aber bei etwas gedrehtem Rotor, wobei eine Krafteinwirkung der Klinkennase auf das Klinkenrad und eine Schubwirkung durch die Stückgutsäule im Sinne eines Weiterdrehens des Rotors gegeben sind, und wobei der Klinkenmechanismus die Rotordrehbewegung in Ausgeberichtung unterstützt, indem die Klinkennase federbelastet auf das Klinkenrad drückt;
Fig.4 die Vorrichtung nach Fig. 1 bis 3 bei weiter gedrehtem Rotor, wobei der zuvor in Sperrstellung gewesene Flügel noch nicht unter der Gleitebene der Stückgutausgabe ist, und der nachfolgende Flügel das Stückgut gerade noch nicht berührt,
Fig.5 die Vorrichtung nach Fig.1 bis 4 bei wieder weitergedrehtem Rotor, wobei der zuvor in Sperrstellung gewesene Flügel und der diesem nachfolgende Flügel eine Rutschebene für das im Ausgebevorgang befindliche Stückgut bilden und das nachfolgende Stückgut bereits gesperrt wird;
Fig.6 die Vorrichtung nach Fig.1 bis 5 bei neuerlich weitergedrehtem Rotor, wobei der zuvor in Sperrstellung gewesene Flügel schon unter der Gleitebene ist und das im Ausgebevorgang befindliche Stückgut bereits den nachfolgenden Flügel verlassen hat; und
Fig.7 die Ausgabeseite der Vorrichtung nach Fig.1 in Draufsicht.

Die in der Zeichnung dargestellte Ausführungsform einer erfindungsgemäßen Vorrichtung 1 zum Ausgeben von gestapelten Stückgütern 2a, 2b hat Magazine 3, die gegenüber der Vertikalen geneigt angeordnet sind und an ihrer unteren Stirnseite 4 eine Ausgebeöffnung 5 aufweisen. Die Magazine 3 haben einen U-förmigen Querschnitt, wobei der Steg 3a dieses Querschnittes den Magazinboden bildet, und die Schenkel 3b, 3c die seitlichen Magazinwände bilden.

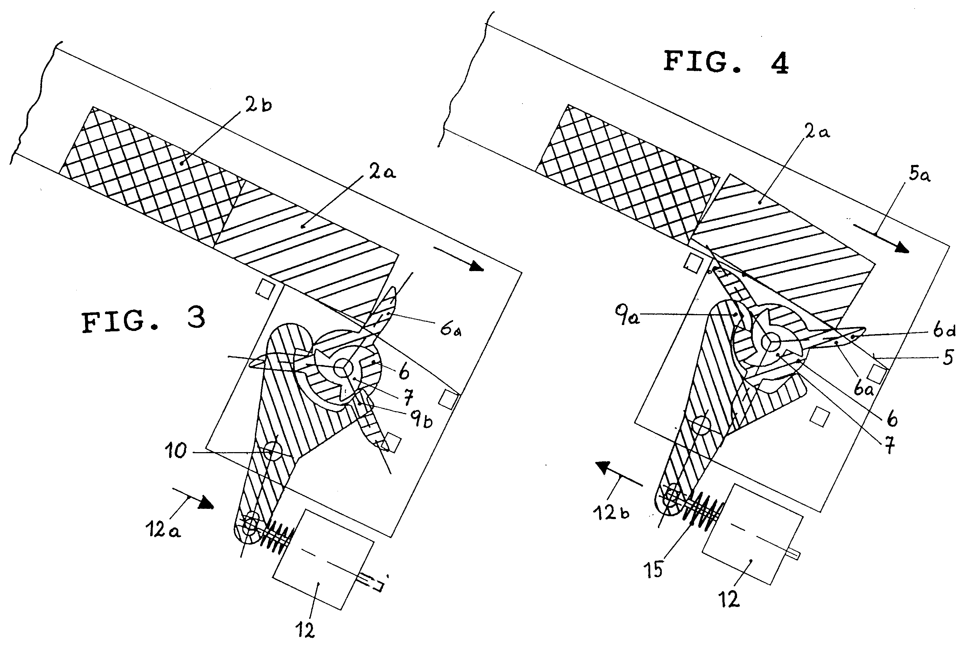

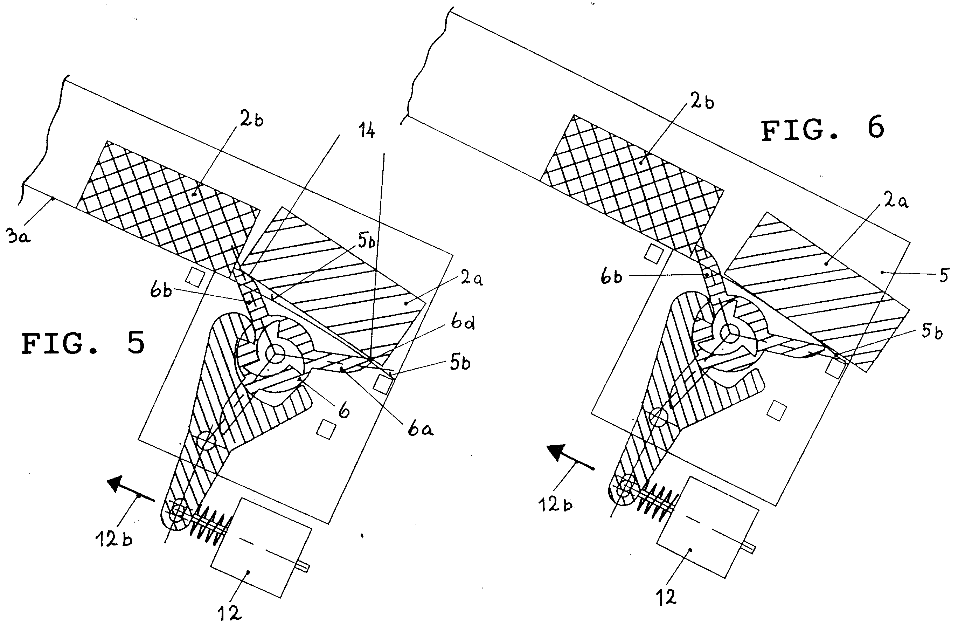

In der Nähe der Ausgabeöffnung 5 ist unmittelbar unter dem Magazinboden 3a ein Rotor 6 mit drei Flügeln 6a, 6b, 6c angeordnet, der zugleich den Ausgeber und Anschlag bildet. Dieser Rotor 6 ist um eine Achse 8 drehbar, wobei die Tangentialrichtung des Rotors 6 an der Seite des Magazins 3 entsprechend der Rutschrichtung des Stückgutes 2a, 2b im Magazin 3, die durch den Pfeil 5a angedeutet ist, verläuft. Mit dem Rotor 6 ist ein Klinkenrad 7 verbunden, welches mit einer Klinke 9a und einer Klinkennase 9b, die sich auf einen Klinkenkörper 9 befinden, zusammenarbeitet. Der Klinkenkörper 9 ist in beiden Richtungen des Doppelpfeiles 10a um die Achse 10 schwenkbar. Durch Eingriff der Klinke 9a in die Zähne des Klinkenrades 7 wird der Rotor 6 gegen Drehung gesperrt. Nach Entriegelung des Rotors 6 durch Lösen der Klinke 9a vom Klinkenrad 7 wird der den Anschlag bildende Flügel 6a durch den Schub der Stückgüter 2a, 2b in Ausgebe- bzw. Rutschrichtung 5a gedreht und soweit geneigt, daß das vorderste Stückgut 2a passieren kann. Dabei wird gleichzeitig der nachfolgende Flügel 6b durch eine korrespondierende Öffnung 13 im Magazinboden 3a nach oben an die Unterseite des passierenden Stückgutes 2a herangeführt. Sobald das Stückgut 2a sich über den zuvor gesperrt gewesenen, als Anschlag wirkenden Flügel 6a neigt und diesen dabei noch stärker nach unten drückt, dreht der nachfolgende Flügel 6b im gleichen Maß nach oben und kommt in Anschlag gegen die Stirnseite des nächsten Stückgutes 2b. Ist der Rotor 6 gesperrt, hält dieser Flügel 6b das Stückgut 2b an. Vorteilhaft kann der Rotor 6 so angeordnet sein, daß jeder Flügel 6a, 6b, 6c auf seiner Kreisbahn durch eine entsprechende Öffnung 13 (siehe Fig.7) im Magazinboden 3a hindurch das ihm nächstgelegene Stückgut 2a, 2b vom Magazinboden 3a her geringfügig anhebt, wobei der nachfolgende Flügel, z. B. der Flügel 6b, gemeinsam mit dem über den Magazinboden 3a hinausragenden Teil 6d des Flügels 6a eine Rutschfläche 14 bildet und der nachfolgende Flügel zugleich das nachfolgende Stückgut 2b gegen eine Weiterbewegung sperrt (siehe die Fig. 4 und 5).

Der Klinkenmechanismus mit dem Klinkenkörper 9 und dem mit dem Rotor 6 drehfest verbundenen Klinkenrad 7 ist mit einem Betätigungsmechanismus versehen, der einen Elektromagneten 12 als Antrieb aufweist. Die Anordnung ist so getroffen, daß einerseits eine geringe Betätigungskraft zur Entriegelung ausreicht und andererseits eine Drehbewegung des Rotors 6 um einen Winkel von 120° bei einmaliger Betätigung des Klinkenmechanismus sichergestellt ist. Dabei sind die beiden auf dem Klinkenkörper 9 angeordneten Elemente, Klinke 9a und Klinkennase 9b, so aufeinander abgestimmt, daß jeweils auf das Klinkenrad 7 und damit auf den Rotor 6 eine die Ausgebebewegung unterstützende Drehbewegung ausgeübt wird.

Der Rotor 6 kann auch mit Antriebsmitteln, z. B. einem Elektromotor, versehen sein. Ein solcher Antrieb kann selbständig zur Stellung des Rotors 6 koordiniert arbeiten. Vorteilhaft ist es auch, einen Antrieb des Rotors 6 zusammen mit einem Klinkenmechanismus vorzusehen und diesen Antrieb mit dem Antrieb des Klinkenmechanismus zu koordinieren. Hiezu kann man einen elektronischen Rechner vorsehen.

Einen elektronischen Rechner kann man auch zur Anpassung der Rotorbewegung an unterschiedlich lange Stückgüter 2a, 2b vorsehen.

Die erfindungsgemäß ausgebildete Vorrichtung 1 arbeitet wie folgt:

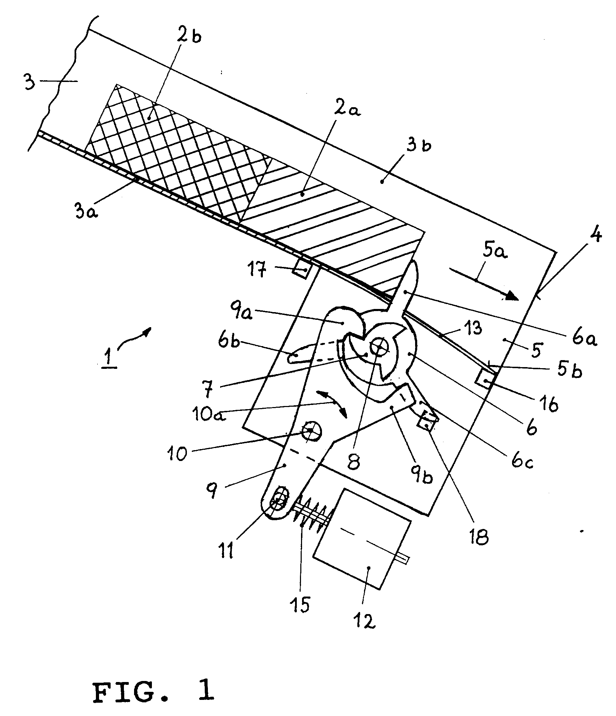

Es sei von der Sperrstellung gemäß Fig. 1 ausgegangen; in dieser Position bildet der Flügel 6a des Rotors 6 einen sperrenden Anschlag für das Stückgut 2a. Das Klinkenrad 7, und damit auch der gesamte Rotor 6, wird in dieser Position von der Klinke 9a des Klinkenkörpers 9 an einer Drehung gehindert.

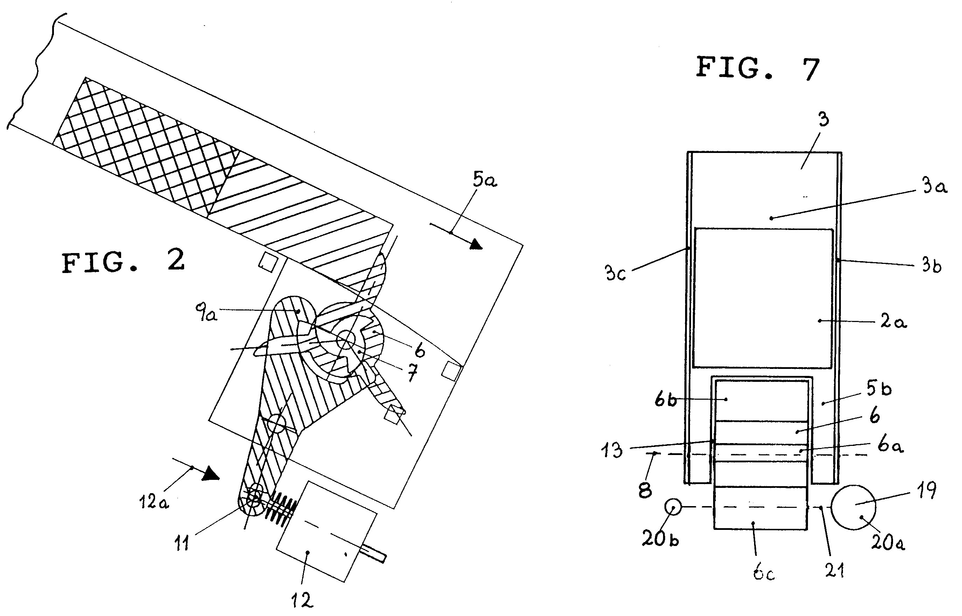

In der Position gemäß Fig. 2 ist die Klinke 9a aus der Kreisbahn des Klinkenrades 7 durch Erregen des Elektromagneten 12, wodurch sich das Verbindungsgelenk 11 zwischen Elektromagnet 12 und Klinkenkörper 9 in Anzugsrichtung 12a des Elektromagneten 12 bewegt hat, herausgezogen worden. Dadurch ist eine Drehbewegung des Rotors 6 in Richtung 5a des Ausgebens möglich.

In die Position gemäß Fig.3 bewegt sich der Rotor 6 mit dem sperrenden Rotorflügel 6a einerseits durch die abwärtswirkende Komponente der Gewichtskräfte der Stückgüter 2a, 2b und andererseits aufgrund der Berührungskraft zwischen Klinkennase 9b und Klinkenrad 7, die die Ausgebebewegung durch Einleitung einer Drehbewegung des Rotors 6 in Ausgeberichtung unterstützt. Die in Anzugsrichtung 12a wirkende Kraft des Elektromagneten 12 wird dabei gemäß der Hebelübersetzung um die Achse 10 auf die Klinkennase 9b übertragen.

Zur Position gemäß Fig.4 kommt es dadurch, daß der Elektromagnet 12 abgeschaltet wurde und die rückstellende Kraft der Feder 15 in Pfeilrichtung 12b durch die oben erwähnte Hebelübersetzung eine Krafteinleitung über die Klinke 9a auf das Klinkenrad 7 und damit auf den Rotor 6 derart bewirkt, daß der Rotor 6 eine Unterstützung seiner Drehbewegung in Ausgaberichtung 5a erfährt, die den Ausgebevorgang beschleunigt. Das Stückgut 2a liegt nach wie vor am Flügel 6a an.

In der Position gemäß Fig.5 hat sich der Rotor 6 in der Ausgeberichtung 5a gegenüber der Position, welche in Fig.4 dargestellt ist, so weitergedreht, daß der Flügel 6a sich der Gleitfläche 5b des Magazinbodens 3a vor der Ausgebeöffnung 5 nähert. Dabei bildet der Flügel 6b zunächst zusammen mit dem über die Gleitfläche 5b hinausragenden Teil des Flügels 6a eine Rutschfläche 14 für das Stückgut 2a, und dann, nachdem der Flügel 6a im Zuge der Rotordrehung unter das Niveau der Gleitfläche 5b gekommen ist, rutscht das Stückgut 2a im Zuge der Ausgebebewegung auf dem Flügel 6b und auf der Gleitfläche 5b aufliegend weiter. Für das nachfolgende Stückgut 2b bildet der nachfolgende Flügel 6b gleichzeitig eine Sperre in Ausgeberichtung.

Zur Position gemäß Fig.6 kommt es, wenn das Stückgut 2a auf der Gleitfläche 5b soweit in Ausgeberichtung gerutscht ist, daß es bereits aus der Ausgebeöffnung 5 herausragt. Der Flügel 6b sperrt weiterhin das nachfolgende Stückgut 2b.

Ein kompletter Ausgebezyklus ist dann abgeschlossen, wenn das auszugebende Stückgut 2a die Ausgebeöffnung 5 zur Gänze passiert hat und der Rotor 6 mit dem Flügel 6b für das Stückgut 2b, analog wie in Fig.1 hinsichtlich des Stückgutes 2a und des Flügels 6a dargestellt, eine Sperre bildet. Dies ist dann der Fall, wenn der Rotor 6, unterstützt durch die auf das Stückgut 2b wirkende Schwerkraft und das vom Klinkenmechanismus gelieferte Zusatzdrehmoment, in die in Fig.1 dargestellte Position gelangt ist. Das Zusatzdrehmoment ergibt sich dabei aus der von der Feder 15 des Elektromagneten 12 über die bereits erwähnte Hebelübersetzung auf die Klinke 9a und weiter auf das Klinkenrad 7 einwirkende Kraft. Das Stückgut 2b, welches nun in jener Lage vorliegt, die in Fig.1 vom Stückgut 2a eingenommen wird, ist dann für eine Ausgabe bereit.

Sensoren 16, 17 und 18, welche an der Ausgebeöffnung 5, im Bereich des vordersten festgehaltenen Stückgutes 2a im Magazin 3 und an einer im Drehbereich der Flügel 6a, 6b, 6c liegenden Stelle angeordnet sind, können zur Steuerung des gesamten Ausgebevorganges derart verwendet werden, daß ihre Signale in einer elektronischen Recheneinheit (nicht dargestellt) geeignet verknüpft oder einzeln verarbeitet werden, um den Antrieb des Rotors 6 zu steuern, z. B. indem die Einschaltzeitpunkte und die Einschaltzeitdauern des Elektromagneten 12 festgelegt werden.

Eine Variante hiezu ergibt sich, wenn man als Sensor 16 einen Sensor vorsieht, der das Abheben des Stückgutes 2a vom Magazinboden 3a, welches Abheben beim In-Bewegung-kommen des Stückgutes 2a auftritt, erfaßt. Hierzu eignet sich z.B. ein optischer Reflexsensor mit geringer Reichweite, dessen Lichtstrahl von unten auf das Stückgut 2a gerichtet wird, oder z.B. ein Mikroschalter, dessen Fühler im Magazinboden 3a angeordnet ist. Beim Abheben des Stückgutes 2a vom Magazinboden 3a, welches sich ergibt, wenn das Stückgut 2a auf die stärker als der Magazinboden 3a geneigte Gleitfläche 5b gelangt (siehe Fig.4), fällt das Reflexsignal des Sensors weg. Dies kann dahingehend zur Steuerung des Elektromagneten 12 benützt werden, daß der Elektromagnet 12, welcher zur Einleitung des Ausgebevorganges eingeschaltet worden ist, solange eingeschaltet bleibt, bis das Reflexsignal wegfällt. Dann hat sich das Stückgut 2a bereits zur Ausgebeöffnung 5 hin in Bewegung gesetzt.

Vorteilhaft kann auch, wie in Fig.7 schematisch dargestellt ist, eine Lichtschranke 19 vorgesehen werden, mit der der ordnungsgemäße Ablauf des Ausgebevorgangs überwacht werden kann. Der von der Lichtquelle 20a zum Sensor 20b dieser Lichtschranke gerichtete Lichtstrahl 21 verläuft im Bereich der Ausgebeöffnung 5 in einem vorgewählten Abstand über dem durch die Oberkanten der seitlichen Magazinwände 3b, 3c gegebenen Niveau. Der Lichtstrahl 21 wird so von Stückgütern 2a, 2b unterbrochen, welche im Zuge des Ausgebevorganges um mehr als diesen bei der Positionierung der Lichtschranke 20 gewählten Abstand über die seitlichen Magazinwände 3b, 3c hinausragen.

## Patentansprüche

1. Vorrichtung (1) zum Ausgeben von Stückgütern (2a, 2b) aus Magazinen (3), die gegenüber der Vertikalen geneigt angeordnet sind und an ihrer unteren Stirnseite (4) eine Ausgebeöffnung (5) mit einem Ausgeber aufweisen, welcher durch einen in der Nähe der Ausgebeöffnung (5) angeordneten und gegen Drehung arretierbaren Rotor (6) mit mehreren symmetrisch zueinander versetzten radialen Flügeln (6a, 6b, 6c) gebildet ist, dessen Drehachse (8) unterhalb des Magazinraumes verläuft, und der mit einem Antrieb versehen ist, welche Flügel (6a, 6b, 6c) im Zuge der Drehung des Rotors (6) eine zum Teil durch das Magazin (3) verlaufende Umlaufbahn durchlaufen, wobei sich die Flügel (6a, 6b, 6c), welche je einen Ausgeber und einen Anschlag für die Stückgüter (2a, 2b) bilden, bei der Drehung des Rotors (6) in Rutschrichtung (5a) der Stückgüter (2a, 2b) im Magazin (3) bzw. in Ausgeberichtung der Stückgüter (2a, 2b) aus dem Magazin (3) bewegen, und hierbei jeweils ein Flügel zunächst einen Anschlag bildet, der nach Entriegelung des Rotors (6) von dem der Ausgebeöffnung benachbarten Stückgut (2a), gedreht wird, und der nachfolgende Flügel in das Magazin (3) eintritt und einen Anschlag für das nachfolgende Stückgut bildet, dadurch gekennzeichnet, daß zum Drehen und zum Arretieren des Rotors (6) ein Klinkenmechanismus aus einem mit dem Rotor (6) drehfest verbundenen Klinkenrad (7) und einer Klinke (9a), die auf einem schwenkbaren, mit einem Betätigungsmechanismus verbundenen Klinkenkörper (9) angeordnet und in die Kreisbahn des Klinkenrades (7) hinein- und wieder herausbewegbar ist, vorgesehen ist, und daß die Drehachse des Rotors (6) in oder unterhalb eines Bodens (3a) des Magazins (3) verläuft, und daß die Flügel (6a, 6b, 6c) des Rotors durch eine Öffnung (13) des Magazinbodens (3a) hindurchbewegbar sind.

2. Vorrichtung nach Anspruch 1, dadurch gekennzeichnet, daß der Klinkenmechanismus außer der Klinke (9a) auch eine Klinkennase (9b) aufweist und die Klinke (9a) und die Klinkennase (9b) wechselweise in die Kreisbahn des Klinkenrades (7) hinein- und wieder herausbewegbar sind und abwechselnd das Klinkenrad (7) arretieren und die Klinkennase (9b) beim Hineinbewegen in die Kreisbahn des Klinkenrades (7) jeweils an einem Zahnrücken des Klinkenrades (7) im Sinne eines Weiterdrehens des Klinkenrades (7) angreift.

3. Vorrichtung nach Anspruch 2, dadurch gekennzeichnet, daß die Klinke (9a) und die Klinkennase (9b) untereinander durch einen Mechanismus verbunden sind, der feste Positionen dieser beiden Elemente (9a, 9b) zueinander festlegt.

4. Vorrichtung nach Anspruch 2, dadurch gekennzeichnet, daß die Klinke (9a) und die Klinkennase (9b) am Klinkenkörper (9) angeordnet sind.

5. Vorrichtung nach Anspruch 4, dadurch gekennzeichnet, daß die Klinke (9a) und die Klinkennase (9b) bei Betätigung des Klinkenkörpers (9) in abwechselnder Weise auf das Klinkenrad (7) und damit auf den Rotor (6) einwirken, und so eine Zwangssteuerung der Rotordrehbewegung um einen, dem Flügelwinkelversatz entsprechenden Winkelbetrag erreicht wird.

6. Vorrichtung nach einem der Ansprüche 1 bis 5, dadurch gekennzeichnet, daß der Betätigungsmechanismus mechanisch, elektrisch, elektromagnetisch oder durch einen pneumatischen Druckmittelzylinder antreibbar ist.

7. Vorrichtung nach Anspruch 6, dadurch gekennzeichnet, daß der Betätigungsmechanismus mit einer die Klinke (9a) in Sperrstellung führenden Rückstellfeder (15) versehen ist.

8. Vorrichtung nach einem der Ansprüche 1 bis 7, dadurch gekennzeichnet, daß der Klinkenkörper (9) Antriebsmittel aufweist, die sowohl hinsichtlich ihrer Geschwindigkeit als auch bezüglich ihrer Anpaßbarkeit an unterschiedlich lange Stückgüter (2a, 2b) über einen elektronischen Rechner regelbar sind.

9. Vorrichtung nach einem der Ansprüche 1 bis 8, dadurch gekennzeichnet, daß der jeweils im Magazin vor dem der Ausgebeöffnung (5) benachbarten Stückgut (2a) befindliche Flügel (6a) des Rotors (6), wenn er in Ausgeberichtung gedreht wird, soweit geneigt wird, daß er gemeinsam mit dem nachfolgenden Flügel (6b), der dabei auf seiner Kreisbahn durch die Öffnung (13) im Magazinboden (3a) das dort befindliche Stückgut (2a) vom Magazinboden (3a) her berührt oder ein wenig anhebt, eine Rutschfläche (14) für dieses Stückgut (2a) bildet.

10. Vorrichtung nach einem der Ansprüche 1 bis 9, dadurch gekennzeichnet, daß die Flügel (6a, 6b, 6c) des Rotors (6) in tangentialer Ansicht eine Rechteck-, Trapez- oder Dreieckform aufweisen, wobei die Öffnung (13) am ausgabeseitigen Ende des Magazinbodens (3a) ausgebildet ist.

11. Vorrichtung nach einem der Ansprüche 1 bis 10, dadurch gekennzeichnet, daß die Magazine (3) einen U-förmigen Querschnitt haben, wobei der Steg dieses Querschnittes den Magazinboden (3a) bildet und die Schenkel die seitlichen Magazinwände (3b, 3c) bilden.

12. Vorrichtung nach einem der vorhergehenden Ansprüche, dadurch gekennzeichnet, daß mehrere Magazine (3) parallel nebeneinander in einer vertikal geneigten Ebene angeordnet sind.

13. Vorrichtung nach einem der Ansprüche 1 bis 12, dadurch gekennzeichnet, daß sie eine Lichtschranke (19) aufweist, deren Lichtstrahl (21) in der Nähe der Ausgebeöffnung (5) quer über sämtliche Magazinenden verläuft und von einem mehr als ein vorgewähltes Maß über die seitlichen Magazinwände (3b, 3c) hinausragenden Stückgut (2a, 2b) unterbrechbar ist.

14. Vorrichtung nach einem der Ansprüche 1 bis 13, dadurch gekennzeichnet, daß sie Sensoren bzw. Schalter (16, 17, 18) aufweist, die an der Ausgebeöffnung (5), um das Gleiten eines Stückgutes (2a, 2b) hin zur Ausgebeöffnung (5) zu erfassen, im Bereich des vordersten festgehaltenen Stückgutes (2a) im Magazin (3), um das allfällige Nichtvorhandensein eines Stückgutes für einen Ausgebevorgang zu erfassen, und an einer im Drehbereich der Flügel (6a, 6b, 6c) liegenden Stelle, um die Drehbewegung des Rotors (6), und damit der Flügel, um den gewünschten Winkelbetrag zu erfassen, angeordnet sind und diese Sensoren bzw. Schalter (16, 17, 18) mit einem elektronischen Rechner in Verbindung stehen.

15. Vorrichtung nach Anspruch 6, dadurch gekennzeichnet, daß der Klinkenkörper (9) mit einem als Antrieb dienenden Elektromagneten (12) verbunden ist und ein Sensor oder Schalter (16) vorgesehen ist, der das Abheben des der Ausgebeöffnung (5) nächstliegenden Stückgutes (2a) vom Magazinboden (3a) erfaßt und den Elektromagneten (12) steuert, wobei beim Abheben des Stückgutes (2a), welches beim In-Bewegung-kommen desselben auftritt, der Elektromagnet (12), der beim Einschalten im Sinne eines Drehens des Rotors (6) wirkt, abgeschaltet wird.

## Claims

1. An arrangement (1) for delivering items (2a, 2b) from magazines (3) which are inclinedly arranged relative to the vertical and comprise a delivery opening (5) including a delivery means at their lower end side (4), which delivery means is formed by a rotor (6) arranged in the vicinity of the delivery opening (5) and having several radial blades (6a, 6b, 6c) symmetrically offset relative to each other, the rotor being capable of being locked against rotation, and the axis of rotation (8) of the rotor being arranged below the magazine space, and the rotor being provided with a drive, the blades (6a, 6b, 6c) moving on a continuous path in the course of rotation of the rotor (6), which continuous path partially extends through the magazine (3), the blades (6a, 6b, 6c) each of which forms a delivery means and a stop for the items (2a, 2b), upon rotation of the rotor (6), respectively moving in a skidding direction (5a) of the items (2a, 2b) within the magazine (3) and in a delivery direction of the items (2a, 2b) out of the magazine (3), wherein one blade each at first forms a stop which, upon unlocking of the rotor (6), is rotated by the item (2a) adjacent the delivery opening, and the subsequent blade enters into the magazine (3) and forms a stop for the subsequent item, characterised in that for rotating and arresting the rotor (6), a latch mechanism is provided, the latch mechanism including a ratchet wheel (7) connected with the rotor (6) for rotation therewith and a latch (9a) arranged on a pivotable latch body (9) that is connected with an actuating meachnism, the latch being movable into and out of the circular path of the ratchet wheel (7), and that the axis of rotation of the rotor (6) is arranged in or below a bottom (3a) of the magazine (3), and that the blades (6a, 6b, 6c) of the rotor are capable of being moved through an opening (13) of the magazine bottom (3a).

2. An arrangement according to claim 1, characterised in that the latch mechanism also comprises a latch nose (9b) in addition to the latch (9a), and the latch (9a) and the latch nose (9b) are alternately movable into and out of the circular path of the ratchet wheel (7) and alternately arrest the ratchet wheel (7), and that the latch nose (9b), when moved into the circular path of the ratchet wheel (7), engages at a tooth back of the ratchet wheel (7) in the direction of further rotation of the ratchet wheel (7).

3. An arrangement according to claim 2, characterised in that the latch (9a) and the latch nose (9b) are interconnected by a mechanism defining fixed positions of these two elements (9a, 9b) relative to each other.

4. An arrangement according to claim 2, characterised in that the latch (9a) and the latch nose (9b) are arranged on the latch body (9).

5. An arrangement according to claim 4, characterised in that upon actuation of the latch body (9), the latch (9a) and the latch nose (9b) alternately act on the ratchet wheel (7) and thus on the rotor (6) so as to effect a positive control of the rotational movement of the rotor about an angle corresponding to the angle of offset of the blades.

6. An arrangement according to any one of claims 1 to 5, characterised in that the actuating mechanism is capable of being driven mechanically, electrically, by solenoid means or by a pneumatic pressure medium cylinder.

7. An arrangement according to claim 6, characterised in that the actuating mechanism is provided with a return spring (15) for guiding the latch (9a) into the locked position.

8. An arrangement according to any one of claims 1 to 7, characterised in that the latch body (9) comprises drive means capable of being controlled through an electronic computer both in terms of their speed and as regards their adaptability to items (2a, 2b) of different lengths.

9. An arrangement according to any one of claims 1 to 8, characterised in that the respective blade (6a) of the rotor (6) present in the magazine in front of the item (2a) adjacent the delivery opening (5), if rotated in the delivery direction, is inclined to such an extent that, together with the following blade (6b) which, on its circular path through the opening (13) in the magazine bottom (3a), contacts the item (2a) located there from the magazine bottom (3a) or slightly lifts the same, forms a skidding surface (14) for this item (2a).

10. An arrangement according to any one of claims 1 to 9, characterised in that the blades (6a, 6b, 6c) of the rotor (6), in tangential view, have a rectangular, trapezoidal or triangular shape, the opening (13) being formed at the delivery-side end of the magazine bottom (3a).

11. An arrangement according to any one of claims 1 to 10, characterised in that the magazines (3) have a U-shaped cross-section, the web of this cross-section forming the magazine bottom (3a) and the legs forming the lateral magazine walls (3b, 3c).

12. An arrangement according to any one of the preceding claims, characterised in that several magazines (3) are adjacently arranged in parallel in a vertically inclined plane.

13. An arrangement according to any one of claims 1 to 12, characterised in that it comprises a photoelectric barrier (19) whose light beamn (21) extends transversely over all the magazine ends near the delivery opening (5) and is interruptable by an item (2a, 2b) projecting beyond the lateral magazine walls (3b, 3c) by more than a pre-selected extent.

14. An arrangement according to any one of claims 1 to 13, characterised in that it comprises sensors or switches (16, 17, 18), which are arranged at the delivery opening (5) so as to detect the sliding of an item (2a, 2b) towards the delivery opening (5), in the region of the foremost arrested item (2a) in the magazine (3) so as to detect the possible absence of an item for a delivery procedure, and at a location in the region of rotation of the blades (6a, 6b, 6c) so as to detect the rotational movement of the rotor (6) and thus of the blades about the desired angle amount, and these sensors or switches (16, 17, 18) are connected with an electronic computer.

15. An arrangement according to claim 6, characterised in that the latch body (9) is associated with a solenoid (12) serving as drive, a detector or switch (16) being provided which detects lifting of the item (2a) arranged next to the delivery opening (5), off the magazine bottom (3a) and controls the solenoid (12), the solenoid (12) which acts to rotate said rotor (6) when activated, being turned off when the item (2a) is lifted as happens when this item starts to move.

## Revendications

1. Dispositif (1) pour distribuer des articles (2a, 2b) depuis des magasins (3), qui sont disposés de manière inclinée par rapport à la verticale et qui présentent une ouverture de distribution (5) avec un distributeur au niveau de leur face frontale inférieure (4), lequel est formé d'un rotor (6) disposé au voisinage de l'ouverture de distribution (5), pouvant être arrêté en rotation, comprenant plusieurs pales (6a, 6b, 6c) radiales décalées de manière symétrique l'une par rapport à l'autre, dont l'axe de rotation (8) s'étend sous la chambre du magasin, et qui est muni d'un dispositif d'entraînement, les pales (6a, 6b, 6c) parcourant un trajet circulaire s'étendant en partie au travers du magasin (3) lors de la rotation du rotor (6), dans lequel les pales (6a, 6b, 6c), qui forment chacune un distributeur et une butée pour les articles (2a, 2b), se déplacent lors de la rotation du rotor (6) dans le sens de glissement (5a) des articles (2a, 2b) dans le magasin (3) ou dans le sens de distribution des articles (2a, 2b) hors du magasin (3), et ainsi une pale forme respectivement tout d'abord une butée qui tourne, après le déblocage du rotor (6), devant l'article (2a) voisin de l'ouverture de distribution, et la pale suivante pénètre dans le magasin (3) et forme une butée pour l'article suivant, caractérisé en ce que, pour entraîner et arrêter le rotor (6), un mécanisme à cliquet est prévu comprenant une roue à rochet (7) liée de manière solidaire en rotation avec le rotor (6) et un cliquet (9a), qui est disposé sur un corps de cliquet (9) pouvant pivoter et relié à un mécanisme d'actionnement, et qui peut entrer et ressortir dans le trajet circulaire de la roue à rochet (7), en ce que l'axe de rotation du rotor (6) s'étend dans ou au dessous d'un fond (3a) du magasin, et en ce que les pales (6a, 6b, 6c) du rotor sont déplaçables au travers d'une ouverture (13) du fond (3a) du magasin.

2. Dispositif selon la revendication 1, caractérisé en ce que le mécanisme à cliquet présente un talon de cliquet (9b) en plus du cliquet (9a), le cliquet (9a) et le talon de cliquet (9b) peuvent alternativement entrer et ressortir dans le trajet circulaire de la roue à rochet (7) et arrêtent alternativement la roue à rochet (7), et le talon de cliquet (9b) en entrant dans le trajet circulaire de la roue à rochet (7) engrène respectivement avec un dos de rochet de la roue à rochet (7) dans le sens d'une rotation supplémentaire de la roue à rochet (7).

3. Dispositif selon la revendication 2, caractérisé en ce que le cliquet (9a) et le talon de cliquet (9b) sont reliés réciproquement par un mécanisme qui détermine les positions fixes de ces deux éléments (9a, 9b) l'un par rapport à l'autre.

4. Dispositif selon la revendication 2, caractérisé en ce que le cliquet (9a) et le talon de cliquet (9b) sont disposés sur un corps de cliquet (9).

5. Dispositif selon la revendication 4, caractérisé en ce que le cliquet (9a) et le talon de cliquet (9b) agissent sur la roue à rochet (7) et ainsi sur le rotor (6) lors de l'actionnement de manière alternative du corps de cliquet (9), et permettent ainsi d'atteindre une commande automatique forcée de la rotation du rotor d'une valeur angulaire correspondante au décalage angulaire entre les pales.

6. Dispositif selon l'une des revendications 1 à 5, caractérisé en ce que le mécanisme d'actionnement peut être entraîné mécaniquement, électriquement, électromagnétiquement ou par l'intermédiaire d'un vérin pneumatique à agent de pression.

7. Dispositif selon la revendication 6, caractérisé en ce que le mécanisme d'actionnement est muni d'un ressort de rappel (15) du cliquet (9a) vers une position de blocage.

8. Dispositif selon l'une des revendications 1 à 7, caractérisé en ce que le corps de cliquet (9) présente des moyens d'entraînement qui sont ajustables par un calculateur électronique, aussi bien à l'égard de leur vitesse qu'à l'égard de leur adaptation à différentes longueurs d'articles (2a, 2b).

9. Dispositif selon l'une des revendications 1 à 8, caractérisé en ce que la paie (6a) du rotor (6) qui se trouve respectivement dans le magasin devant l'article (2a) voisin de l'ouverture de distribution (5) est inclinée, lorsqu'elle pivote dans le sens de distribution, si bien qu'elle forme une surface de coulissement (14) pour cet article (2a) avec la paie suivante (6b), qui frôle ou soulève un peu, depuis le fond (3a) du magasin, dans son trajet circulaire au travers de l'ouverture (13) dans le fond (3a) du magasin, l'article (2a) qui s'y trouve.

10. Dispositif selon l'une des revendications 1 à 9, caractérisé en ce que les pales (6a, 6b, 6c) du rotor (6) présentent, dans une vue tangentielle, une forme de triangle, de trapèze ou de rectangle, l'ouverture (13) étant formée au niveau de l'extrémité de la face de distribution du fond (3a) du magasin.

11. Dispositif selon l'une des revendications 1 à 10, caractérisé en ce que les magasins (3) ont une section transversale en forme de U, la base de cette section formant le fond (3a) de magasin et les branches formant les parois de magasin latérales (3b, 3c).

12. Dispositif selon l'une des revendications précédentes, caractérisé en ce que plusieurs magasins (3) parallèles sont disposés l'un à côté de l'autre de manière inclinée par rapport à la verticale.

13. Dispositif selon l'une des revendications 1 à 12, caractérisé en ce qu'il présente un barrage photoélectrique (19) dont le faisceau lumineux (21) s'étend orthogonalement à toutes les extrémités des magasins au voisinage de l'ouverture de distribution (5) et peut être interrompu par un article faisant saillie au dessus des parois de magasin latérales (3b, 3c) de plus d'une quantité déterminée.

14. Dispositif selon l'une des revendications 1 à 13, caractérisé en ce qu'il présente des capteurs ou des commutateurs (16, 17, 18) qui sont disposés au niveau de l'ouverture de distribution (5), pour détecter un glissement d'un article (2a, 2b) au travers de l'ouverture de distribution (5), dans la région de retenue de l'article précédent (2a) dans le magasin (3), pour détecter une éventuelle absence d'article pour le procédé de distribution, et dans une position dans une région de rotation des pales (6a, 6b, 6c), pour détecter la rotation du rotor (6) et ainsi celle des pales et la valeur angulaire souhaitée, et ces capteurs ou commutateurs (16, 17, 18) sont reliés à un calculateur électronique.

15. Dispositif selon la revendication 6, caractérisé en ce que le corps de cliquet (9) est relié à un électroaimant (12) servant de dispositif d'entraînement et est muni d'un capteur ou commutateur (16) qui détecte le soulèvement, depuis le fond du magasin (3a), de l'article (2a) disposé après l'ouverture de distribution (5) et commande l'électroaimant (12), l'électroaimant (12), qui agit lors d'une connexion dans le sens d'une rotation du rotor (6), étant déconnecté lors du soulèvement de l'article (2a) qui apparaît lors d'une mise en mouvement de l'article.
